# EUROPEAN PATENT SPECIFICATION

(11) **EP 3 654 608 B1**
(45) Date of publication and mention of the grant of the patent: **11.10.2023**
(21) Application number: 18844082.0
(22) Date of filing: 06.08.2018
(51) Int. Cl.: H04L 9/40, H04L 67/02, H04L 69/22, H04L 69/324, H04L 101/622, H04W 12/06

(54) **METHOD, APPARATUS AND DEVICE FOR GRANTING NETWORK PERMISSION TO TERMINAL**
VERFAHREN, GERÄT UND VORRICHTUNG ZUR ERTEILUNG EINER NETZWERKERLAUBNIS FÜR EIN ENDGERÄT
PROCÉDÉ, APPAREIL ET DISPOSITIF POUR ACCORDER UNE AUTORISATION DE RÉSEAU À UN TERMINAL

(30) Priority: 10.08.2017 CN 201710681839
(43) Date of publication of application: 20.05.2020
(73) Proprietor: Huawei Technologies Co., Ltd., Longgang District Shenzhen, Guangdong 518129 (CN)
(72) Inventor: XU, Yibin, Shenzhen Guangdong 518129 (CN); WANG, Donghui, Shenzhen Guangdong 518129 (CN); YANG, Rong, Shenzhen Guangdong 518129 (CN)
(74) Representative: Gill Jennings & Every LLP
(86) International application number: PCT/CN2018/098909
(87) International publication number: WO 2019/029468

(56) References cited:
- CN-A- 101 277 185
- CN-A- 104 660 405
- CN-A- 106 357 672
- CN-A- 106 936 804
- US-A1- 2003 233 312
- US-A1- 2008 244 271
- US-A1- 2012 011 046

## Description

### TECHNICAL FIELD

This application relates to the field of communications technologies, and in particular, to a method and an apparatus for granting network permission to a terminal, and a device.

### BACKGROUND

In an authentication solution, a server attempts to authenticate a terminal based on an authentication request message sent by the terminal, and when determining that the terminal is authenticated, the server sends an authentication success message to an authentication device. The authentication device grants network permission to the terminal based on the authentication success message.

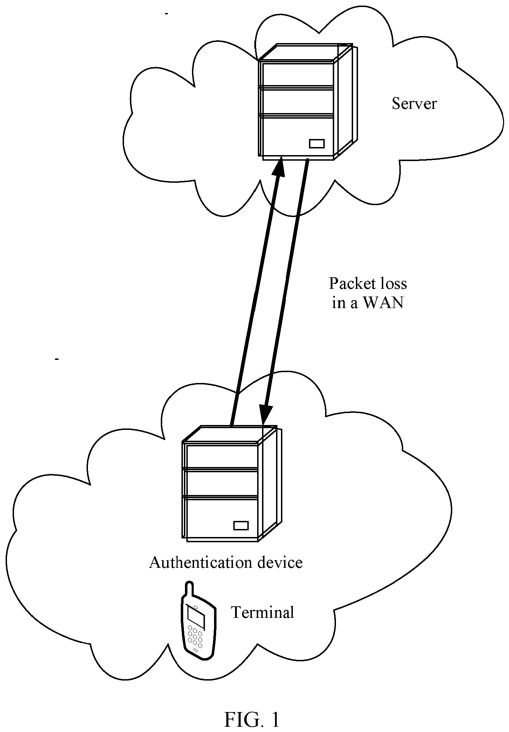

As shown in FIG. 1, if the authentication device and the server are deployed across a wide area network (English: wide area network, WAN), because the WAN is unstable, a packet loss may occur between the authentication device and the server. If the authentication success message sent by the server is lost, or a response message sent by the authentication device is lost, the server retransmits the authentication success message. A delay of the authentication success message prolongs a wait period of the terminal.

US2008/244271 describes a method and a system for authentication based on a wireless identification, and a wireless identification.

CN106936804 describes an access control method and an authentication device.

### SUMMARY

The present invention is defined by the appended claims. Embodiments not falling within the scope of the claims are exemplary only. This application provides a method and an apparatus for granting network permission to a terminal, and a device, to resolve a problem of a long wait period of a terminal resulting from WAN instability.

The invention is disclosed by the independent claims. Further embodiments are described by the dependent claims.

### BRIEF DESCRIPTION OF DRAWINGS

FIG. 1 is a schematic diagram showing that an authentication device and an authentication server are deployed across a WAN;
FIG. 2A and FIG. 2B are a first flowchart of granting network permission to a terminal according to an embodiment of this application;
FIG. 3 is a flowchart of authenticating a terminal based on reputation data of the terminal according to an embodiment of this application;
FIG. 4A and FIG. 4B are a second flowchart of granting network permission to a terminal according to an embodiment of this application;
FIG. 5A and FIG. 5B are a first flowchart of granting network permission to a terminal based on a captive portal authentication scenario according to an embodiment of this application;
FIG. 6A and FIG. 6B are a second flowchart of granting network permission to a terminal based on a captive portal authentication scenario according to an embodiment of this application;
FIG. 7 is a first schematic diagram of an apparatus for granting network permission to a terminal according to an embodiment of this application;
FIG. 8 is a second schematic diagram of an apparatus for granting network permission to a terminal according to an embodiment of this application;
FIG. 9 is a schematic structural diagram of an authentication device according to an embodiment of this application; and
FIG. 10 is a schematic structural diagram of an authentication server according to an embodiment of this application.

### DESCRIPTION OF EMBODIMENTS

The following describes the embodiments of this application with reference to the accompanying drawings.

This application is applicable to a captive portal (English: captive portal) authentication scenario, an Extensible Authentication Protocol (English: Extensible Authentication Protocol, EAP) authentication scenario, a Remote Authentication Dial In User Service (English: remote authentication dial in user service, RADIUS) protocol authentication scenario, a Diameter (English: Diameter) protocol authentication scenario, a Kerberos (English: Kerberos) protocol authentication scenario, and the like.

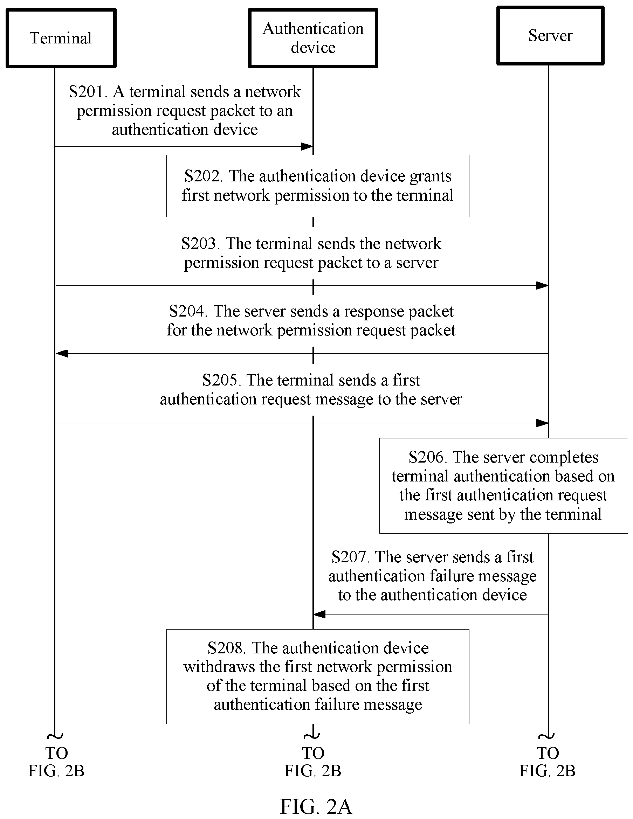

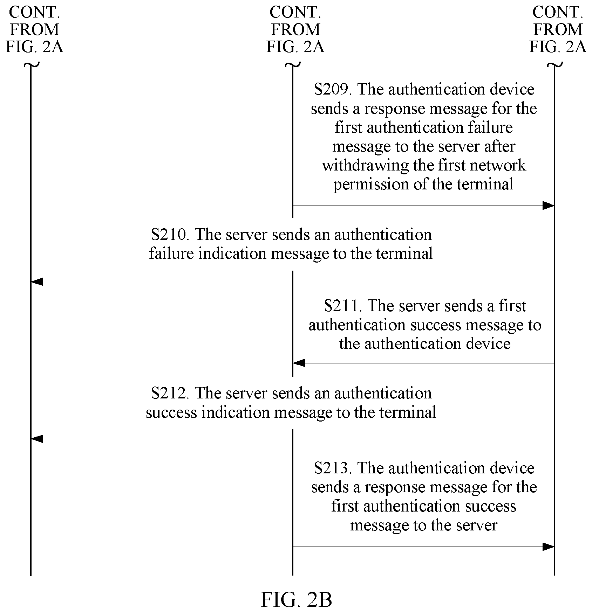

Referring to FIG. 2A and FIG. 2B, this application provides a method for granting network permission to a terminal. A captive portal authentication scenario is used as an example, and the method includes the following steps.

In the captive portal authentication scenario, a server may be one physical server, and the server includes a function of a portal server and a function of an authentication server, or the server may include two separate physical servers: a portal server and an authentication server.

5201. A terminal sends a network permission request packet to an authentication device.

The network permission request packet is a network access packet, and a source Media Access Control (English: media access control, MAC) address in the network access packet is a MAC address of the terminal.

For example, the network access packet may be a Hyper Text Transfer Protocol (English: Hyper Text Transfer Protocol, HTTP)/Hyper Text Transfer Protocol Secure (HTTPS) packet, or an IP packet.

S202. The authentication device grants first network permission to the terminal.

Optionally, the first network permission may be temporary network permission having a time limit. Optionally, after receiving the network permission request packet sent by the terminal, the authentication device sends a response packet for the network permission request packet to the terminal. For example, when the server is one physical server, and the server includes the function of the portal server and the function of the authentication server, the response packet for the HTTP/HTTPS packet includes a uniform resource locator (English: Uniform Resource Locator, URL) of the server. When the server may include two separate physical servers: the portal server and the authentication server, the response packet for the HTTP/HTTPS packet includes a URL of the portal server.

S203. The terminal sends a network permission request packet to the server.

A destination address of the HTTP/HTTPS packet in S201 is an address of a website that the terminal requests to access.

When the server is one physical server, and the server includes the function of the portal server and the function of the authentication server, the terminal may send the network permission request packet to the server based on the URL of the server included in the received response packet for the HTTP/HTTPS packet. Therefore, a destination address of a HTTP/HTTPS in S203 is an address of the server.

When the server includes two separate physical servers: the portal server and the authentication server, the terminal may send the network permission request packet to the portal server based on the URL of the portal server included in the received response packet for the HTTP/HTTPS packet. Therefore, a destination address of the HTTP/HTTPS in S203 is an address of the portal server.

Optionally, S203 may be performed before S202.

S204. The server sends a response packet for the network permission request packet.

That the authentication server sends the response packet for the network permission request packet means that the authentication server pushes a login authentication page to the terminal.

S205. The terminal sends a first authentication request message to the server.

A user enters an authentication token (for example, a user name and a password) based on the authentication page pushed by the server.

The terminal sends the first authentication request message including the authentication token to the authentication server.

S206. The server completes terminal authentication based on the first authentication request message sent by the terminal; and performs S207 if the server determines, based on the first authentication request message sent by the terminal, that the terminal fails to be authenticated; or performs S211 if the server determines, based on the first authentication request message sent by the terminal, that the terminal is authenticated. When the server includes two separate physical servers: the portal server and the authentication server, the authentication server performs an authentication-related step.

S207. The server sends a first authentication failure message to the authentication device.

S208. The authentication device withdraws the first network permission of the terminal based on the first authentication failure message.

Therefore, when the terminal fails to be authenticated, the authentication device may withdraw the first network permission of the terminal in time based on the first authentication failure message. S209. The authentication device sends a response message for the first authentication failure message to the server.

S210. The server sends an authentication failure indication message to the terminal.

Optionally, S209 may be performed before S208.

The process ends.

S211. The server sends a first authentication success message to the authentication device.

In addition, optionally, the first authentication success message instructs the authentication device to grant second network permission to the terminal, and the second network permission is broader than or equal to the first network permission.

When the second network permission is broader than the first network permission, the authentication device grants the second network permission to the terminal based on the first authentication success message, and in this case, the terminal obtains broader network permission.

When the first authentication success message does not include an instruction of granting the second network permission to the terminal, or when the first authentication success message instructs the authentication device to grant the second network permission to the terminal and the second network permission is equal to the first network permission, the authentication device may not perform any action, that is, maintain the current network permission of the terminal. The authentication device may alternatively confirm the current network permission of the terminal. For example, the first network permission is temporary network permission having a time limit, and the authentication device makes the current network permission of the terminal permanent based on the first authentication success message.

S212. The server sends an authentication success indication message to the terminal.

The server sends the authentication success indication before receiving the response message that is sent by the authentication device for the first authentication success message (for example, when sending the first authentication success message). The authentication device grants the first network permission to the terminal before receiving the first authentication success message. Therefore, when the terminal is authenticated, the server directly sends the authentication success indication to the terminal without waiting for the response message that is sent by the authentication device for the first authentication success message. This can avoid an excessively long wait period of the terminal and poor user experience caused by a packet loss when the authentication device and the server are deployed across a WAN, and shorten a wait period of the terminal. A basic idea of this embodiment of this application is: A packet of the terminal is permitted first, that is, network permission is granted to the terminal first, and if authentication fails, the network permission of the terminal is withdrawn in time.

S213. The authentication device sends a response message for the first authentication success message to the server.

The process ends.

In the captive portal authentication scenario, a user needs to enter information such as a user name and a password based on an authentication page pushed by a server, and an entire captive portal authentication process occupies a relatively long time. Therefore, in a possible design, this application further provides a method for authenticating a terminal based on reputation data of the terminal. Before an authentication device obtains a result of authenticating a terminal by a server, the server may authenticate the terminal based on reputation data of the terminal, and the authentication device determines whether to grant first network permission to the terminal. This method is applied to the captive portal authentication scenario, and may be performed before S202 in the foregoing embodiment, and used as a supplement and assistance to the authentication process in FIG. 2A and FIG. 2B.

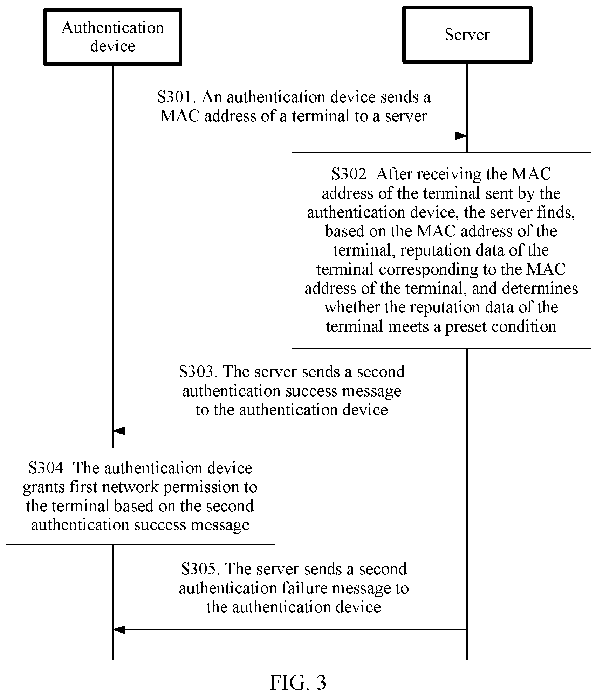

As shown in FIG. 3, a basic process of the authentication process is as follows.

5301. The authentication device sends a MAC address of the terminal to the server.

When the terminal sends a network permission request packet to the server, the network permission request packet needs to be forwarded by the authentication device. The authentication device may add the MAC address of the terminal to the network permission request packet, and then send the network permission request packet to the server. Alternatively, the authentication device directly forwards the network permission request packet to the server, and then sends a separate packet including the MAC address of the terminal to the server.

S302. After receiving the MAC address of the terminal sent by the authentication device, the server finds, based on the MAC address of the terminal, reputation data of the terminal corresponding to the MAC address of the terminal, determines whether the reputation data of the terminal meets a preset condition, and performs S303 if the reputation data of the terminal meets the preset condition, or performs S305 if the reputation data of the terminal does not meet the preset condition. Optionally, the reputation data of the terminal includes but is not limited to at least one of the following: a quantity of times of historical authentication success of the terminal, a ratio of the quantity of times of historical authentication success of the terminal to a total quantity of times of historical authentication of the terminal, and a credit rating of a user using the terminal.

Reputation data of a plurality of terminals may be stored in the server in advance, or obtained by the server from another device storing the reputation data of the plurality of terminals.

For example, the server determines the reputation data of the terminal based on the MAC address of the terminal. It is assumed that the reputation data of the terminal is the quantity of times of historical authentication success of the terminal, and the preset condition is that a quantity of times of historical authentication success is greater than a first threshold. When the quantity of times of historical authentication success of the terminal is greater than the first threshold, the server determines that the reputation data of the terminal meets the preset condition.

For another example, the server determines the reputation data of the terminal based on the MAC address of the terminal. For example, the reputation data of the terminal is the credit rating of the user using the terminal. It is assumed that the preset condition is that a credit level of credit data is higher than a preset rating. When a credit level of the credit rating of the user using the terminal is higher than the preset rating, the server determines that the reputation data of the terminal meets the preset condition.

The types and the corresponding preset conditions of the reputation data are examples, and are not used as limitation to this application.

S303. The server sends a second authentication success message to the authentication device.

The second authentication success message is used to instruct the authentication device to grant first network permission to the terminal.

Optionally, the second authentication success message includes an identifier of the first network permission. Alternatively, the second authentication success message does not specifically include an identifier of the first network permission, and instead, the server and the authentication device are agreed that the authentication device can grant the first network permission to the terminal when the authentication device receives the second authentication success message.

S304. The authentication device grants first network permission to the terminal based on the second authentication success message.

The process ends.

S305. The server sends a second authentication failure message to the authentication device.

The second authentication failure message is used to instruct the authentication device temporarily not to grant the first network permission to the terminal.

The process ends.

The terminal is unaware of the process of authenticating the terminal based on the reputation data of the terminal. During captive portal authentication, an authentication page is pushed to the terminal, and a user is required to enter an authentication token. As a result, a captive portal authentication process occupies a long time. The process of authenticating the terminal based on the reputation data of the terminal is automatically performed independently of captive portal authentication. Therefore, a wait period of the terminal and a time occupied by the entire captive portal authentication process are not prolonged. The authentication process is applicable to the captive portal authentication scenario, and can assist the authentication device in determining whether to grant the first network permission to the terminal.

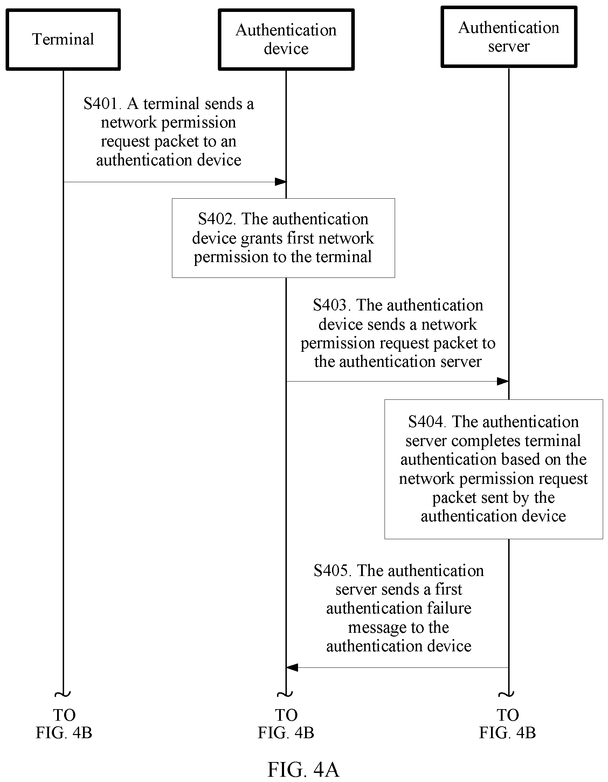

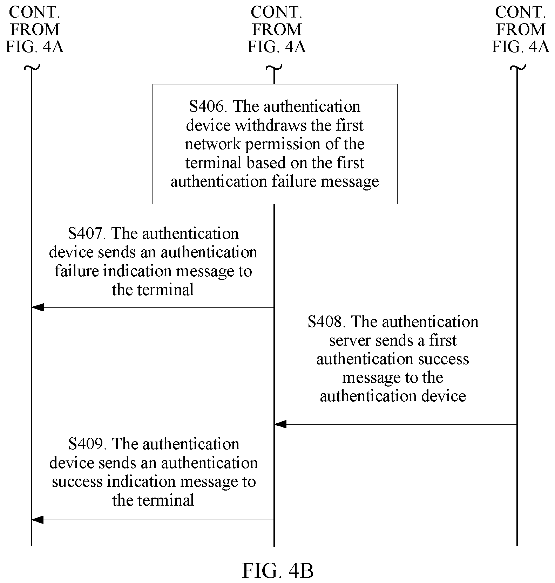

Referring to FIG. 4A and FIG. 4B, this application provides a method for granting network permission to a terminal. An EAP authentication scenario is used as an example, and the method includes the following steps.

In the EAP authentication scenario, a server may be an authentication server.

S401. A terminal sends a network permission request packet to an authentication device.

For example, the network permission request packet may be an EAP start (English: EAP start) packet, or an EAP response (English: EAP response) packet. The network permission request packet may include an authentication token (for example, a digital certificate) of the terminal.

S402. The authentication device grants first network permission to the terminal.

Optionally, the first network permission may be temporary network permission having a time limit. S403. The authentication device sends another network permission request packet to the authentication server.

For example, the network permission request packet is a RADIUS access-request (English: Access-Request) packet. The network permission request packet may include the authentication token of the terminal.

S404. The authentication server completes terminal authentication based on the network permission request packet sent by the authentication device; and performs S405 if determining that the terminal fails to be authenticated; or performs S408 if determining that the terminal is authenticated.

S405. The authentication server sends a first authentication failure message to the authentication device.

For example, the first authentication failure message is a RADIUS access-reject (English: Access-Reject) packet.

S406. The authentication device withdraws the first network permission of the terminal based on the first authentication failure message.

S407. The authentication device sends an authentication failure indication message to the terminal. For example, the authentication failure indication message is an EAP failure packet.

The process ends.

S408. The authentication server sends a first authentication success message to the authentication device.

For example, the first authentication success message is a RADIUS access-accept (English: Access-Accept) packet.

If the first network permission is the temporary network permission having a time limit, the authentication device may further make the current network permission of the terminal permanent based on the first authentication success message.

S409. The authentication device sends an authentication success indication message to the terminal. For example, the authentication success indication message is an EAP success packet.

The process ends.

Therefore, the authentication device can grant the network permission to the terminal before receiving an authentication result sent by the authentication server, to avoid a long wait period of the terminal resulting from WAN instability, and can withdraw the network permission in time when receiving the first authentication failure message sent by the authentication server.

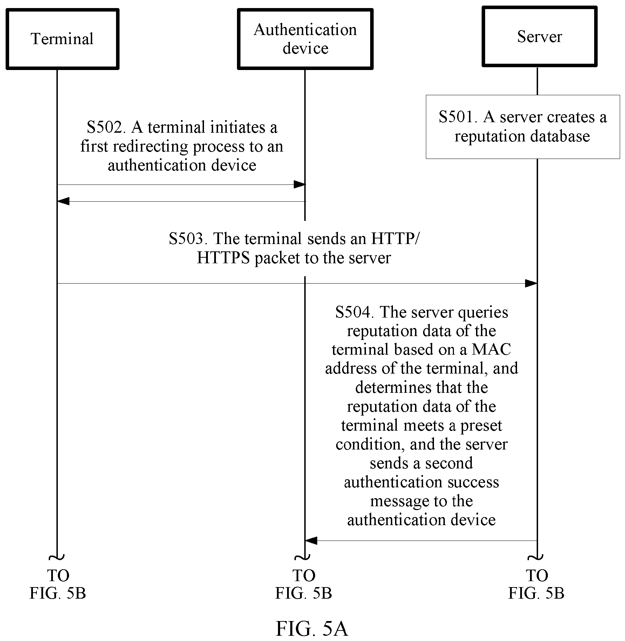

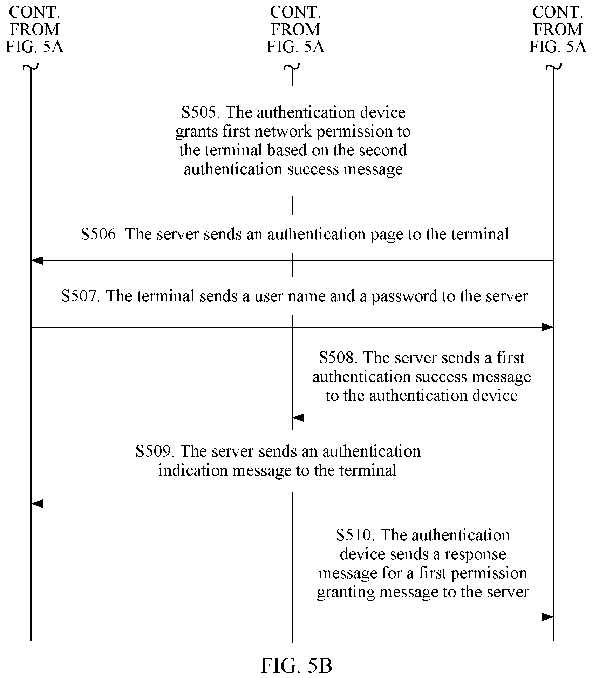

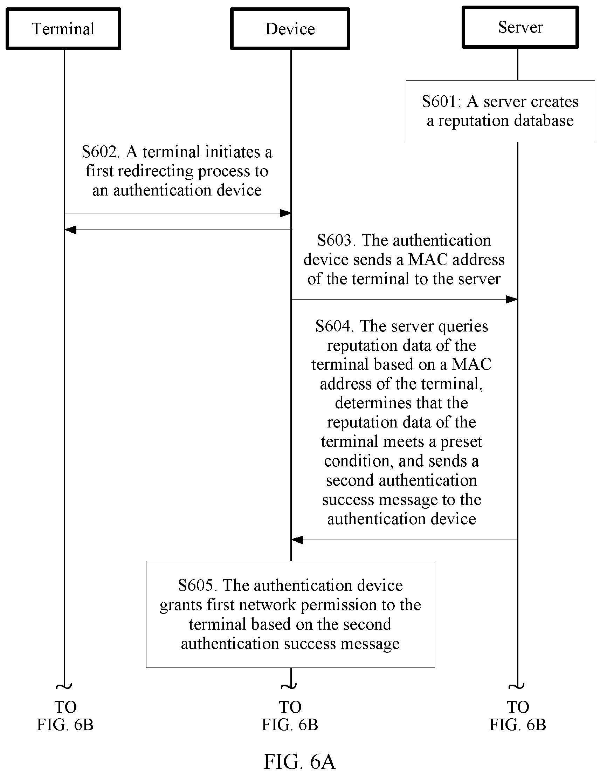

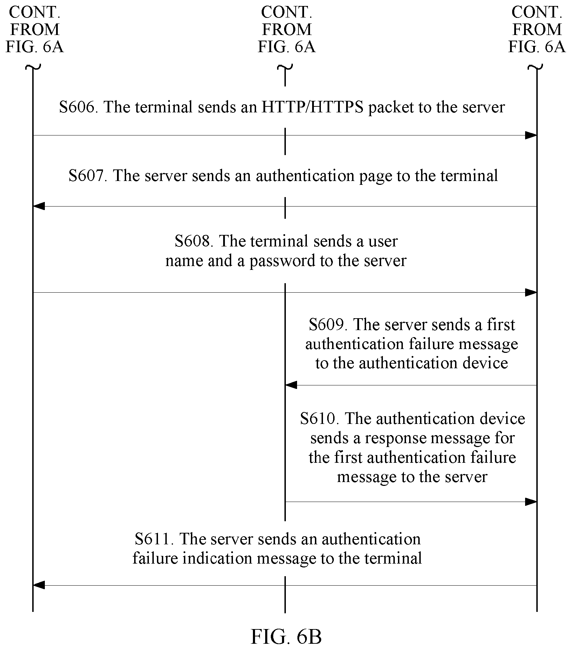

As shown in FIG. 5A, FIG. 5B, FIG. 6A, and FIG. 6B, the following describes in detail the embodiments of this application with reference to a captive portal authentication scenario.

FIG. 5A and FIG. 5B are a first flowchart of granting network permission to a terminal based on the captive portal authentication scenario.

S501. A server creates a reputation database.

The reputation database includes reputation data of a plurality of terminals, and reputation data of each terminal is bound with a MAC address of the corresponding terminal.

S502. A terminal initiates a first redirecting process to a device.

The terminal sends an HTTP/HTTPS packet to an authentication device, and the authentication device sends a response message for the HTTP/HTTPS packet. A source MAC address in the HTTP/HTTPS packet is a MAC address of the terminal. The response message for the HTTP/HTTPS packet includes a URL of the server.

The HTTP/HTTPS packet sent by the terminal to the authentication device is equivalent to S201 in the embodiment of FIG. 2A and FIG. 2B.

S503. The terminal sends an HTTP/HTTPS packet to the server.

The HTTP/HTTPS packet sent by the terminal to the server needs to be forwarded by the authentication device, and the authentication device adds the MAC address of the terminal to the HTTP/HTTPS packet.

The HTTP/HTTPS packet sent by the terminal to the server is equivalent to S203 in the embodiment of FIG. 2A and FIG. 2B.

S504. The server queries reputation data of the terminal based on a MAC address of the terminal, and determines that the reputation data of the terminal meets a preset condition, and the server sends a second authentication success message to the authentication device.

S505. The authentication device grants first network permission to the terminal based on the second authentication success message.

In addition, the authentication device further needs to send a response message for the second authentication success message to the server, and this is not shown in FIG. 4A and FIG. 4B. If the server does not receive the response message that is sent by the authentication device for the second authentication success message, the server needs to retransmit the second authentication success message. However, even if the server needs to retransmit the second authentication success message, no impact is caused on performing S506 by the server. The terminal is unaware of a process of authenticating the terminal by the server based on the reputation data of the terminal, and therefore, no impact is caused on the terminal authentication process by the server shown in FIG. 2A and FIG. 2B.

S506. The server sends an authentication page to the terminal.

S507. The terminal sends a user name and a password to the server.

S508. The server determines, based on the user name and the password, that the terminal is authenticated, and sends a first authentication success message to the authentication device.

S509. The server sends an authentication success indication message to the terminal.

S510. The authentication device sends a response message for the first authentication success message to the server.

The authentication device grants the first network permission to the terminal before receiving the first authentication success message. Therefore, when the terminal is authenticated, the server directly sends the authentication success indication to the terminal without waiting for the response message that is sent by the authentication device for the first authentication success message. This can shorten a wait period of the terminal, and avoid an excessively long wait period of the terminal caused when the response message for the authentication success message is lost.

FIG. 6A and FIG. 6B are a second flowchart of granting network permission to a terminal based on the captive portal authentication scenario.

S601. A server creates a reputation database.

The reputation database includes reputation data of a plurality of terminals, and reputation data of each terminal is bound with a MAC address of the corresponding terminal.

S602. A terminal initiates a first redirecting process to an authentication device.

The terminal sends an HTTP/HTTPS packet to the authentication device, and the authentication device sends a response message for the HTTP/HTTPS packet. A source MAC address in the HTTP/HTTPS packet is a MAC address of the terminal. The response message for the HTTP/HTTPS packet includes a URL of the server.

The HTTP/HTTPS packet sent by the terminal to the authentication device is equivalent to S201 in the embodiment of FIG. 2A and FIG. 2B.

S603. The authentication device sends a MAC address of the terminal to the server.

The authentication device obtains the MAC address of the terminal based on the source MAC address in the HTTP/HTTPS packet.

S604. The server queries reputation data of the terminal based on the MAC address of the terminal, determines that the reputation data of the terminal meets a preset condition, and sends a second authentication success message to the authentication device.

S605. The authentication device grants first network permission to the terminal based on the second authentication success message.

S606. The terminal sends an HTTP/HTTPS packet to the server.

The HTTP/HTTPS packet sent by the terminal to the server is equivalent to S203 in the embodiment of FIG. 2A and FIG. 2B.

S607. The server sends an authentication page to the terminal.

S608. The terminal sends a user name and a password to the server.

S609. The server determines, based on the user name and the password, that the terminal fails to be authenticated, and sends a first authentication failure message to the authentication device.

S610. The authentication device sends a response message for the first authentication failure message to the server.

The authentication device withdraws the first network permission of the terminal based on the first authentication failure message, and then sends the response message for the first authentication failure message to the server.

5611. The server sends an authentication failure indication message to the terminal.

Therefore, the authentication device may first grant the network permission to the terminal based on a result of authentication performed based on the reputation data of the terminal, and subsequently, if the server notifies the authentication device that the terminal fails to be authenticated, the authentication device withdraws the network permission of the terminal in time.

Based on the foregoing embodiments, this application further provides an apparatus for granting network permission to a terminal, to implement functions of the authentication device in FIG. 2A, FIG. 2B, FIG. 4A, and FIG. 4B. The apparatus 700 includes a receiving unit 701 and a processing unit 702.

The receiving unit 701 is configured to receive a network permission request packet sent by a terminal.

The processing unit 702 is configured to grant first network permission to the terminal.

The receiving unit 701 is further configured to: after the first network permission is granted to the terminal, receive a first authentication failure message sent by an authentication server, where the first authentication failure message is sent when the authentication server determines, based on a first authentication request message sent by the terminal, that the terminal fails to be authenticated. The processing unit 702 is further configured to withdraw the first network permission of the terminal based on the first authentication failure message.

For details, refer to the method embodiments of FIG. 2A, FIG. 2B, FIG. 4A, and FIG. 4B, and details are not described in this application again.

Based on the foregoing embodiments, this application further provides an apparatus for granting network permission to a terminal, to implement functions of the server in FIG. 2A and FIG. 2B. The apparatus 800 includes a receiving unit 801 and a sending unit 802.

The receiving unit 801 is configured to receive a first authentication request, where the first authentication request is used to request to authenticate a terminal.

The sending unit 802 is configured to send a first authentication success message to an authentication device.

The sending unit 802 is further configured to: before a response message that is sent by the authentication device for the first authentication success message is received, send an authentication success indication message to the terminal.

For details, refer to the method embodiment of FIG. 2A and FIG. 2B, and details are not described in this application again.

It should be understood that division of the units of the terminal and the network device is merely logical function division. In actual implementation, all or some of the units may be integrated into one physical entity, or the units may be physically separate. In addition, the units all may be implemented by software invoked by a processing element, or all may be implemented by hardware, or some units may be implemented by software invoked by a processing element, and some units are implemented by hardware. For example, the processing unit may be a separately disposed processing element, may be implemented by being integrated into a chip, or may be stored in a memory in a form of a program, and a processing element invokes the program and executes the function of the unit. Implementations of the other units are similar. In addition, all or some of the units may be integrated together, or may be implemented independently. The processing element may be an integrated circuit, and have a signal processing capability. In an implementation process, steps in the foregoing methods or the foregoing units may be implemented by using a hardware integrated logical circuit in the processing element, or by using instructions in a form of software. For example, the units may be one or more integrated circuits configured to implement the foregoing methods, for example, one or more application-specific integrated circuits (English: ASIC), or one or more digital signal processors (English: digital signal processor, DSP), or one or more field-programmable gate arrays (FPGA). For another example, when one of the foregoing units is implemented by the processing element invoking a program, the processing element may be a general-purpose processor, for example, a central processing unit (English: central processing unit, CPU) or another processor that can invoke the program. For another example, the units may be integrated together, and implemented in a form of a system on chip (SOC).

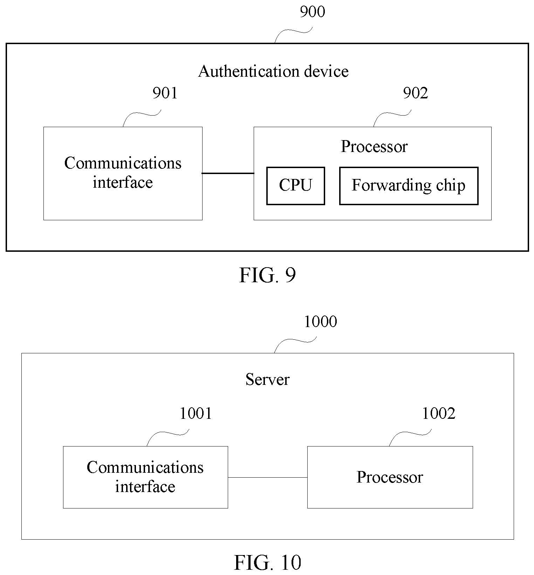

Based on the foregoing embodiments, this application further provides an authentication device, having functions of the authentication device in FIG. 2A, FIG. 2B, FIG. 4A, and FIG. 4B. Referring to FIG. 9, the authentication device 900 includes a communications interface 901 and a processor 902. The communications interface 901 is configured to communicate with another device. Optionally, the authentication device further includes a memory.

The communications interface 901 may include an interface configured to communicate with another device. For example, the communications interface may include an interface configured to communicate with a terminal, an interface configured to communicate with a server, and another interface. The interface may be a wired interface, a wireless interface, or a combination thereof. The wired interface, for example, may be an Ethernet interface. The Ethernet interface may be an optical interface, an electrical interface, or a combination thereof. The wireless interface, for example, may be a wireless local area network (English: wireless local area network, WLAN) interface, a cellular network interface, or a combination thereof.

The processor 902 may be a CPU, or a combination of a CPU and a forwarding chip.

The memory is configured to store a program, an instruction, and the like. Specifically, the program may include a program code, and the program code includes a computer operation instruction. The memory may include a random access memory (English: random-access memory, RAM), or may include a non-volatile memory, for example, at least one magnetic memory. The processor 902 executes the program, the instruction, and the like stored in the memory, to implement the functions of the authentication device in the method embodiments of FIG. 2A, FIG. 2B, FIG. 4A, and FIG. 4B.

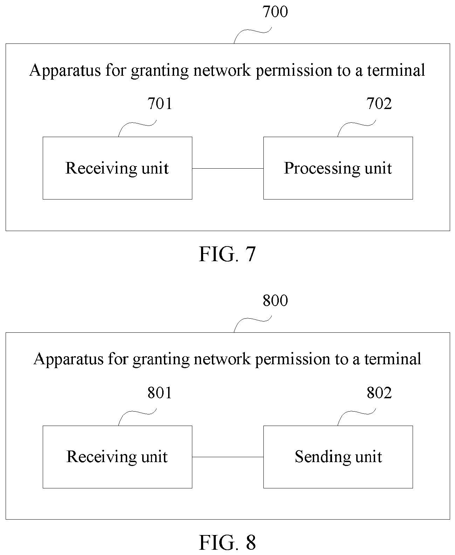

A function of the receiving unit 702 in FIG. 7 is implemented by using the communications interface 901, and a function of the processing unit 702 is implemented by using the processor 902. The processor 902 is configured to:
receive, through the communications interface 901, a network permission request packet sent by the terminal; grant first network permission to the terminal; after granting the first network permission to the terminal, receive, through the communications interface 901, a first authentication failure message sent by an authentication server, where the first authentication failure message is sent when the authentication server determines,
based on a first authentication request message sent by the terminal, that the terminal fails to be authenticated; and withdraw the first network permission of the terminal based on the first authentication failure message.

For details, refer to the method embodiments of FIG. 2A, FIG. 2B, FIG. 4A, and FIG. 4B, and details are not described in this application again.

Based on the foregoing embodiments, this application further provides an authentication server, having functions of the server in FIG. 2A and FIG. 2B. Referring to FIG. 10, the server includes a communications interface 1001 and a processor 1002. The communications interface 1001 is configured to communicate with another device, and the server further includes a memory. Functions of the sending unit 802 and the receiving unit 801 in FIG. 8 are implemented by using the communications interface 1001.

The communications interface 1001 may include an interface configured to communicate with another device. For example, the communications interface may include an interface configured to communicate with an authentication device. The interface may be a wired interface, a wireless interface, or a combination thereof. The wired interface, for example, may be an Ethernet interface. The Ethernet interface may be an optical interface, an electrical interface, or a combination thereof. The wireless interface, for example, may be a WLAN interface, a cellular network interface, or a combination thereof.

The processor 1002 may be a CPU.

The memory is configured to store a program, an instruction, and the like. Specifically, the program may include a program code, and the program code includes a computer operation instruction. The memory may include a RAM, or may include a non-volatile memory, for example, at least one magnetic memory. The processor 1002 executes the program, the instruction, and the like stored in the memory, to implement the functions of the server in the method embodiment of FIG. 2A and FIG. 2B .

The processor 1002 is configured to:
receive a first authentication request through the communications interface 1001, where the first authentication request is used to request to authenticate a terminal; send a first authentication success message through the communications interface 1001; and before receiving a response message that is sent by the authentication device for the first authentication success message, send an authentication success indication message to the terminal through the communications interface 1001.

For details, refer to the method embodiment of FIG. 2A and FIG. 2B, and details are not described in this application again.

According to the method provided in the embodiments of this application, the authentication device receives the network permission request packet sent by the terminal, and the authentication device grants the first network permission to the terminal. After granting the first network permission to the terminal, the authentication device receives the first authentication failure message sent by the server, and the authentication device withdraws the first network permission of the terminal based on the first authentication failure message. The first authentication failure message is sent when the server determines, based on the first authentication request message sent by the terminal, that the terminal fails to be authenticated. Therefore, the authentication device can grant the network permission to the terminal before receiving the authentication result sent by the server, to avoid a long wait period of the terminal resulting from WAN instability, and can withdraw the network permission in time when receiving the first authentication failure message sent by the server. According to the method provided in the embodiments of this application, the server receives the first authentication request, where the first authentication request is used to request to authenticate the terminal. The server sends the first authentication success message to the authentication device. Before receiving the response message that is sent by the authentication device for the first authentication success message, the server sends the authentication success indication message to the terminal. In the captive portal authentication scenario, after granting the network permission to the terminal, the authentication device sends the response message for the authentication success message to the server. After receiving the response message, the server sends the authentication success indication message to the terminal. A user learns, based on the authentication success indication message received by the terminal, that the terminal is granted the network permission, and can access a network. In this application, the authentication device grants the first network permission to the terminal before receiving the first authentication success message. Therefore, when the terminal is authenticated, the server directly sends the authentication success indication to the terminal without waiting for the response message that is sent by the authentication device for the first authentication success message. This can avoid an excessively long wait period of the terminal and poor user experience caused when the response message for the authentication success message is lost, and shorten the wait period of the terminal.

A person skilled in the art should understand that the embodiments of this application may be provided as a method, a system, or a computer program product. Therefore, the embodiments of this application may use a form of hardware only embodiments, software only embodiments, or embodiments with a combination of software and hardware. Moreover, the embodiments of this application may use a form of a computer program product that is implemented on one or more computer-usable storage media (including but not limited to a disk memory, and an optical memory) that include computer-usable program code.

The embodiments of this application are described with reference to the flowcharts and/or block diagrams of the method, the device (system), and the computer program product according to the embodiments of this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A method for granting network permission to a terminal, comprising:
receiving (S205), by a server from a terminal, a first authentication request, wherein the first authentication request is used to request to authenticate a terminal;
authenticating the terminal (S206), by the server, based on the first authentication request message sent by the terminal;
sending (S211), by the server, a first authentication success message to an authentication device;
sending (S212), by the server, an authentication success indication message to the terminal; and
receiving (S213) a response message that is sent by the authentication device for the first authentication success message;
wherein the authentication success indication message, received by the terminal, indicates that that the terminal is granted the network permission and can access a network; and
wherein the first network permission is granted to the terminal before the terminal receives the first authentication success message.

2. The method according to claim 1, wherein the method further comprises:
receiving (S301), by the server, a MAC address of the terminal sent by the authentication device; and
sending (S303), by the server, a second authentication success message to the authentication device, wherein the second authentication success message is determined by the server based on the MAC address of the terminal and reputation data of the terminal, and the second authentication success message instructs the authentication device to grant first network permission to the terminal.

3. An apparatus for granting network permission to a terminal, comprising:
a receiving unit (801), configured to receive a first authentication request from a terminal, wherein the first authentication request is used to request to authenticate a terminal; and
the apparatus configured to authenticate the terminal based on the first authentication request message sent by the terminal;
a sending unit (802), configured to send a first authentication success message to an authentication device, wherein
the sending unit is further configured to send an authentication success indication message to the terminal; and
wherein the receiving unit is further configured to receive a response message that is sent by the authentication device for the first authentication success message;
wherein the authentication success indication message, received by the terminal, indicates that that the terminal is granted the network permission and can access a network; and
wherein the first network permission is granted to the terminal before the terminal receives the first authentication success message.

4. The apparatus according to claim 3, wherein the receiving unit is configured to receive a MAC address of the terminal sent by the authentication device; and
the sending unit is further configured to send a second authentication success message to the authentication device, wherein the second authentication success message is determined by the server based on the MAC address of the terminal and reputation data of the terminal, and the second authentication success message instructs the authentication device to grant first network permission to the terminal.

5. A server, comprising a communications interface and a processor, wherein
the processor is configured to:
receive a first authentication request from a terminal through the communications interface, wherein the first authentication request is used to request to authenticate a terminal;
send a first authentication success message through the communications interface; and
before receiving, through the communications interface, a response message that is sent by the authentication device for the first authentication success message, send an authentication success indication message to the terminal through the communications interface;
wherein the authentication success indication message, received by the terminal, indicates that that the terminal is granted the network permission and can access a network; and
wherein the first network permission is granted to the terminal before the terminal receives the first authentication success message.

6. The server according to claim 5, wherein the processor is further configured to:
receive, through the communications interface, a MAC address of the terminal sent by the authentication device; and
send a second authentication success message to the authentication device through the communications interface, wherein the second authentication success message is determined by the processor based on the MAC address of the terminal and reputation data of the terminal, and the second authentication success message instructs the authentication device to grant first network permission to the terminal.

## Patentansprüche

1. Verfahren zum Gewähren von Netzwerkberechtigung für ein Endgerät, umfassend:
Empfangen (S205) einer ersten Authentifizierungsanforderung durch einen Server von einem Endgerät, wobei die erste Authentifizierungsanforderung verwendet wird, um anzufordern, ein Endgerät zu authentifizieren;
Authentifizieren des Endgeräts (S206) durch den Server auf der Basis der durch das Endgerät gesendeten ersten Authentifizierungsanforderungsnachricht;
Senden (S211) einer ersten Authentifizierungserfolgsnachricht zu einer Authentifizierungsvorrichtung durch den Server;
Senden (S212) einer Authentifizierungserfolgsangabenachricht zu dem Endgerät durch den Server; und
Empfangen (S213) einer Antwortnachricht, die durch die Authentifizierungsvorrichtung für die erste Authentifizierungserfolgsnachricht gesendet wird;
wobei die durch das Endgerät empfangene Authentifizierungserfolgsangabenachricht angibt, dass dem Endgerät die Netzwerkberechtigung gewährt wird und es auf ein Netzwerk zugreifen kann; und
wobei die erste Netzwerkberechtigung dem Endgerät gewährt wird, bevor das Endgerät die erste Authentifizierungserfolgsnachricht empfängt.

2. Verfahren nach Anspruch 1, wobei das Verfahren ferner Folgendes umfasst:
Empfangen (S301) einer durch die Authentifizierungsvorrichtung gesendeten MAC-Adresse des Endgeräts durch den Server; und
Senden (S303) einer zweiten Authentifizierungserfolgsnachricht zu der Authentifizierungsvorrichtung durch den Server, wobei die zweite Authentifizierungserfolgsnachricht durch den Server auf der Basis der MAC-Adresse des Endgeräts und Reputationsdaten des Endgeräts bestimmt wird und die zweite Authentifizierungserfolgsnachricht die Authentifizierungsvorrichtung anweist, dem Endgerät erste Netzwerkberechtigung zu gewähren.

3. Vorrichtung zum Gewähren von Netzwerkberechtigung für ein Endgerät, umfassend:
eine Empfangseinheit (801), ausgelegt zum Empfangen einer ersten Authentifizierungsanforderung von einem Endgerät, wobei die erste Authentifizierungsanforderung verwendet wird, um anzufordern, ein Endgerät zu authentifizieren; und
die Vorrichtung ausgelegt ist zum Authentifizieren des Endgeräts auf der Basis der durch das Endgerät gesendeten ersten Authentifizierungsanforderungsnachricht;
eine Sendeeinheit (802), ausgelegt zum Senden einer ersten Authentifizierungserfolgsnachricht zu einer Authentifizierungsvorrichtung, wobei die Sendeeinheit ferner ausgelegt ist zum Senden einer Authentifizierungserfolgsangabenachricht zu dem Endgerät; und
wobei die Empfangseinheit ferner ausgelegt ist zum Empfangen einer Antwortnachricht, die durch die Authentifizierungsvorrichtung für die erste Authentifizierungserfolgsnachricht gesendet wird;
wobei die durch das Endgerät empfangene Authentifizierungserfolgsangabenachricht angibt, dass dem Endgerät die Netzwerkberechtigung gewährt wird und es auf ein Netzwerk zugreifen kann; und
wobei die erste Netzwerkberechtigung dem Endgerät gewährt wird, bevor das Endgerät die erste Authentifizierungserfolgsnachricht empfängt.

4. Vorrichtung nach Anspruch 3, wobei die Empfangseinheit ausgelegt ist zum Empfangen einer durch die Authentifizierungsvorrichtung gesendeten MAC-Adresse des Endgeräts; und
die Sendeeinheit ferner ausgelegt ist zum Senden einer zweiten Authentifizierungserfolgsnachricht zu der Authentifizierungsvorrichtung, wobei die zweite Authentifizierungserfolgsnachricht durch den Server auf der Basis der MAC-Adresse des Endgeräts und Reputationsdaten des Endgeräts bestimmt wird und die zweite Authentifizierungserfolgsnachricht die Authentifizierungsvorrichtung anweist, dem Endgerät erste Netzwerkberechtigung zu gewähren.

5. Server, der eine Kommunikationsschnittstelle und einen Prozessor umfasst, wobei der Prozessor ausgelegt ist zum
Empfangen einer ersten Authentifizierungsanforderung von einem Endgerät mittels der Kommunikationsschnittstelle, wobei die erste Authentifizierungsanforderung verwendet wird, um anzufordern, ein Endgerät zu authentifizieren;
Senden einer ersten Authentifizierungserfolgsnachricht mittels der Kommunikationsschnittstelle; und
vor dem Empfangen einer Antwortnachricht, die durch die Authentifizierungsvorrichtung für die erste Authentifizierungserfolgsnachricht gesendet wird, mittels der Kommunikationsschnittstelle, Senden einer Authentifizierungserfolgsangabenachricht zu dem Endgerät mittels der Kommunikationsschnittstelle;
wobei die durch das Endgerät empfangene Authentifizierungserfolgsangabenachricht angibt, dass dem Endgerät die Netzwerkberechtigung gewährt wird und es auf ein Netzwerk zugreifen kann; und
wobei die erste Netzwerkberechtigung dem Endgerät gewährt wird, bevor das Endgerät die erste Authentifizierungserfolgsnachricht empfängt.

6. Server nach Anspruch 5, wobei der Prozessor ferner ausgelegt ist zum Empfangen einer durch die Authentifizierungsvorrichtung gesendeten MAC-Adresse des Endgeräts mittels der Kommunikationsschnittstelle; und
Senden einer zweiten Authentifizierungserfolgsnachricht zu der Authentifizierungsvorrichtung mittels der Kommunikationsschnittstelle, wobei die zweite Authentifizierungserfolgsnachricht durch den Prozessor auf der Basis der MAC-Adresse des Endgeräts und Reputationsdaten des Endgeräts bestimmt wird und die zweite Authentifizierungserfolgsnachricht die Authentifizierungsvorrichtung anweist, dem Endgerät erste Netzwerkberechtigung zu gewähren.

## Revendications

1. Procédé d'octroi d'une autorisation de réseau à un terminal, comprenant :
la réception (S205), par un serveur à partir d'un terminal, d'une première demande d'authentification, dans lequel la première demande d'authentification est utilisée pour demander l'authentification d'un terminal,
l'authentification du terminal (S206), par le serveur, en fonction du premier message de demande d'authentification envoyé par le terminal ;
l'envoi (S211), par le serveur, d'un premier message de réussite d'authentification à un dispositif d' authentification ;
l'envoi (S212), par le serveur, d'un message d'indication de réussite d'authentification au terminal ; et
la réception (S213) d'un message de réponse envoyé par le dispositif d' authentification pour le premier message de réussite d'authentification ;
dans lequel le message d'indication de réussite d'authentification, reçu par le terminal, indique que l'autorisation de réseau est octroyée au terminal et que celui-ci peut accéder à un réseau ; et
dans lequel la première autorisation de réseau est octroyée au terminal avant que le terminal ne reçoive le premier message de réussite d'authentification.

2. Procédé selon la revendication 1, le procédé comprenant en outre :
la réception (S301), par le serveur, d'une adresse MAC du terminal envoyée par le dispositif d'authentification ; et
l'envoi (S303), par le serveur, d'un deuxième message de réussite d'authentification au dispositif d'authentification, dans lequel le deuxième message de réussite d'authentification est déterminé par le serveur en fonction de l'adresse MAC du terminal et de données de réputation du terminal, et le deuxième message de réussite d'authentification ordonne au dispositif d'authentification d'octroyer une première autorisation de réseau au terminal.

3. Appareil d'octroi d'une autorisation de réseau à un terminal, comprenant :
une unité de réception (801), configurée pour recevoir une première demande d'authentification provenant d'un terminal, dans lequel la première demande d'authentification est utilisée pour demander l'authentification d'un terminal ; et
l'appareil étant configuré pour authentifier le terminal en fonction du premier message de demande d'authentification envoyé par le terminal ;
une unité d'envoi (802), configurée pour envoyer un premier message de réussite d'authentification à un dispositif d'authentification, dans lequel l'unité d'envoi est configurée en outre pour envoyer un message d'indication de réussite d'authentification au terminal ; et
dans lequel l'unité de réception est configurée en outre pour recevoir un message de réponse envoyé par le dispositif d'authentification pour le premier message de réussite d'authentification ;
dans lequel le message d'indication de réussite d'authentification, reçu par le terminal, indique que l'autorisation de réseau est octroyée au terminal et que celui-ci peut accéder à un réseau ; et
dans lequel la première autorisation de réseau est octroyée au terminal avant que le terminal ne reçoive le premier message de réussite d'authentification.

4. Appareil selon la revendication 3, dans lequel l'unité de réception est configurée pour recevoir une adresse MAC du terminal envoyée par le dispositif d'authentification ; et l'unité d'envoi est configurée en outre pour envoyer un deuxième message de réussite d'authentification au dispositif d'authentification, dans lequel le deuxième message de réussite d'authentification est déterminé par le serveur en fonction de l'adresse MAC du terminal et de données de réputation du terminal, et le deuxième message de réussite d'authentification ordonne au dispositif d'authentification d'octroyer une première autorisation de réseau au terminal.

5. Serveur, comprenant une interface de communication et un processeur, dans lequel le processeur est configuré pour :
recevoir une première demande d'authentification provenant d'un terminal par le biais de l'interface de communication, dans lequel la première demande d'authentification est utilisée pour demander l'authentification d'un terminal ;
envoyer un premier message de réussite d'authentification par le biais de l'interface de communication ; et
avant la réception, par le biais de l'interface de communication, d'un message de réponse envoyé par le dispositif d'authentification pour le premier message de réussite d'authentification, envoyer un message d'indication de réussite d'authentification au terminal par le biais de l'interface de communication ;
dans lequel le message d'indication de réussite d'authentification, reçu par le terminal,
indique que l'autorisation de réseau est octroyée au terminal et que celui-ci peut accéder à un réseau ; et
dans lequel la première autorisation de réseau est octroyée au terminal avant que le terminal ne reçoive le premier message de réussite d'authentification.

6. Serveur selon la revendication 5, dans lequel le processeur est configuré en outre pour :
recevoir, par le biais de l'interface de communication, une adresse MAC du terminal envoyée par le dispositif d'authentification ; et
envoyer un deuxième message de réussite d'authentification au dispositif d'authentification par le biais de l'interface de communication, dans lequel le deuxième message de réussite d'authentification est déterminé par le processeur en fonction de l'adresse MAC du terminal et de données de réputation du terminal, et le deuxième message de réussite d'authentification indique au dispositif d'authentification d'octroyer une première autorisation de réseau au terminal.
